# EUROPÄISCHE PATENTSCHRIFT

(11) **EP 1 541 873 B1**
(45) Veröffentlichungstag und Bekanntmachung des Hinweises auf die Patenterteilung: **28.06.2006**
(21) Anmeldenummer: 03028040.8
(22) Anmeldetag: 08.12.2003
(51) Int. Cl.: F15B 11/042, F15B 13/00, F16K 37/00, F16L 55/027, G05D 7/01

(54) **Verfahren und Einrichtung zur Vorgabe einer Betriebsgeschwindigkeit eines fluidbetätigten Antriebes**
Method and device for setting the functioning speed of a fluid actuator
Méthode et dispositif pour fixer la vitesse de fonctionnement d'un actionneur fluidique

(43) Veröffentlichungstag der Anmeldung: 15.06.2005
(73) Patentinhaber: FESTO AG & Co, 73734 Esslingen (DE)
(72) Erfinder: Veit, Eberhard, 73033 Göppingen (DE); Kees, Ulrich, 66424 Hornburg (DE); Quendt, Volker, 72669 Unterensingen (DE)
(74) Vertreter: Abel, Martin

(56) Entgegenhaltungen:
- DE-A- 2 741 672
- FR-A- 1 025 206
- US-A- 3 334 654
- "CARTRIDGE VALVES PROVIDE DROP-IN FLEXIBILITY A STAFF REPORT" HYDRAULICS AND PNEUMATICS, INDUSTRIAL PUBLISHING CORP. CLEVELAND, US, Bd. 54, Nr. 4, April 2001 (2001-04), Seiten 35-38,82, XP001043676 ISSN: 0018-814X

## Beschreibung

Die Erfindung betrifft ein Verfahren und eine Vorrichtung zur Vorgabe einer Betriebsgeschwindigkeit eines fluidbetätigten Antriebes.

Fluidbetätigte Antriebe, seien eines pneumatische oder hydraulische Antriebe, sind im Stand der Technik in vielfachen Ausführungsvarianten vor allem als Linearantriebe und als Drehantriebe bekannt. Sie enthalten in der Regel ein für den Kraftabgriff geeignetes bewegliches Abtriebsteil, das beispielsweise als Kolbenstange oder, bei kolbenstangenlosen Antrieben, als beweglicher Schlitten ausgeführt ist. Zum Erzeugen der Antriebskräfte wird ein mit dem Abtriebsteil bewegungsgekoppelter Kolben mit unter Druck stehendem Fluid beaufschlagt. Für die Betriebsgeschwindigkeit des fluidbetätigten Antriebes, das heißt der Verfahrensgeschwindigkeit des Abtriebsteils, ist dabei unter anderem die Strömungsrate verantwortlich, mit der das Fluid bzw. Druckmedium zu- oder abgeführt wird.

In der Regel wird die Betriebsgeschwindigkeit der fluidbetätigten Antriebe vor Ort anhand des spezifischen Einsatzfalles eingestellt. Bisher wird ein fluidbetätigter Antrieb hierzu mit einer variabel einstellbaren Drossel ausgestattet, die in die Fluidverbindung eingeschaltet ist und an der sich beispielsweise eine Einstellschraube befindet, mit der sich die gewünschte Strömungsrate durch Einstellen des Drosselungswertes vorgeben lässt. Die Drossel verbleibt nach der vorgenommenen Einstellung am Antrieb.

Der an sich mit der variablen Einstellbarkeit der Drosseln verbundene Vorteil erweist sich allerdings auch als Nachteil, weil sehr leicht unautorisierte Änderungen in der zuvor getroffenen Einstellung vorgenommen werden können, die sich nachteilig auf die Betriebsweise des Antriebes oder einer damit ausgestatteten Maschine oder Anlage auswirken können. Werden beispielsweise bei einer Maschine, die eine Vielzahl von in ihren Bewegungen aufeinander abgestimmter Antriebe beinhaltet, die Einstellungen der Betriebsgeschwindigkeit einzelner Antriebe verändert, kann dies insgesamt die Koordination der Antriebe beeinträchtigen und zu Fehlern im Betriebsablauf führen.

Es existieren zwar auch Drosseln, die über fest vorgegebene Drosselungswerte verfügen - auch als Fest- oder Fixdrosseln bezeichnet - , bei denen eine Veränderung des gegebenen Drosselungswertes nicht möglich ist. Bei einem Einsatz derartiger Drosseln besteht jedoch das Problem, dass man beim Einrichten des Betriebsablaufes einer Maschine keine Möglichkeit hat, die eingesetzten fluidbetätigten Antriebe hinsichtlich ihrer Betriebsgeschwindigkeit variabel an die Gegebenheiten anzupassen.

Es ist die Aufgabe der vorliegenden Erfindung, Maßnahmen vorzuschlagen, die eine variable und dennoch weniger leicht manipulierbare Geschwindigkeitsvorgabe von fluidbetätigten Antrieben gestattet.

Gelöst wird diese Aufgabe durch ein Verfahren zur Vorgabe der Betriebsgeschwindigkeit eines fluidbetätigten Antriebes, wobei man ein eine Einstelldrossel mit variabel einstellbaren Drosselungswerten aufweisendes Einstellgerät in eine zum betreffenden Antrieb führende Fluidverbindung einschaltet und durch Verstellen der Einstelldrossel die gewünschte Betriebsgeschwindigkeit einstellt, wonach man anhand eines durch das Einstellgerät entsprechend dem eingestellten Drosselungswert zur Verfügung gestellten Soll-Referenzwertes aus einer Mehrzahl bereitgestellter Betriebsdrosseln, die über sich in Abstufungen voneinander unterscheidende, fest vorgegebene Drosselungswerte verfügen und mit entsprechenden Ist-Referenzwerten identifiziert sind, diejenige Betriebsdrossel auswählt, deren fest vorgegebener Drosselungswert dem an dem Einstellgerät eingestellten Drosselungswert entspricht, wonach man das Einstellgerät durch die ausgewählte Betriebsdrossel ersetzt.

Ferner wird die Aufgabe gelöst durch eine Einrichtung zur Vorgabe der Betriebsgeschwindigkeit eines fluidbetätigten Antriebes, mit mindestens einem lösbar in die zum betreffenden Antrieb führende Fluidverbindung einschaltbaren Einstellgerät, das eine Einstelldrossel mit variabel einstellbaren Drosselungswerten aufweist und das mit einer Meldeeinrichtung ausgestattet ist, die einen dem momentan eingestellten Drosselungswert entsprechenden Soll-Referenzwert ausgibt, und mit einer Mehrzahl von jeweils anstelle des Einstellgerätes in die Fluidverbindung einschaltbaren Betriebsdrosseln, die über sich in Abstufungen voneinander unterscheidende, fest vorgegebene Drosselungswerte verfügen und denen jeweils ein dem fest vorgegebenen Drosselungswert entsprechender Ist-Referenzwert zugeordnet ist, wobei die Drosselungswerte der Einstelldrossel und der Betriebsdrosseln bei einander entsprechenden Soll- und Ist-Referenzwerten übereinstimmen, so dass nach dem Ersetzen des Einstellgerätes durch eine im Referenzwert übereinstimmende Betriebsdrossel die durch das Einstellgerät eingestellte Betriebsgeschwindigkeit beibehalten bleibt.

Auf diese Weise werden die variablen Einstellmöglichkeiten einer einstellbaren Drossel mit den Sicherheitsmerkmalen einer Fixdrossel kombiniert. Um die Betriebsgeschwindigkeit eines fluidbetätigten Antriebes vorzugeben, wird dieser zunächst mit dem Einstellgerät ausgestattet, das über eine als Einstelldrossel bezeichnet Drossel verfügt, bei der die zur Verfügung gestellten Drosselungswerte variabel eingestellt werden können. Man kann somit vor Ort die Betriebsgeschwindigkeit des fluidbetätigten Antriebes im realen Einsatz durch entsprechende Justierung der Einstelldrossel vorgeben. Hat man die gewünschte Betriebsgeschwindigkeit gefunden und eingestellt, tauscht man das Einstellgerät durch eine als Betriebsdrossel bezeichnete Fixdrossel aus, deren fest vorgegebener Drosselungswert demjenigen entspricht, der zuvor mit der Einstelldrossel eingestellt wurde. Um die richtige Betriebsdrossel zu ermitteln, bedient man sich entsprechender Referenzwerte, wobei eine Mehrzahl von mit untereinander abgestuften Drosselungswerten ausgestatteter Betriebsdrosseln bereitgestellt wird, aus denen man die als Ersatz für das Einstellgerät passende Betriebsdrossel auswählen kann. Die Referenzwerte müssen dabei nicht unbedingt numerisch den tatsächlich realisierten Strömungsraten entsprechen, sondern können beliebige andere aufeinander abgestimmte Werte sein. Nachdem das Einstellgerät durch die zutreffende Betriebsdrossel ersetzt wurde, kann die Betriebsgeschwindigkeit des Antriebes nicht mehr ohne weiteres unautorisiert verändert werden, was sich positiv auf die Betriebssicherheit der mit dem fluidbetätigten Antrieb ausgestatteten Maschine auswirkt.

Die Flexibilität bei der Einstellung der gewünschten Betriebsgeschwindigkeit ist um so größer, je feiner die Abstufung zwischen den fest vorgegebenen Drosselungswerten der bereitgestellten Betriebsdrosseln ist. Zweckmäßigerweise stellt man um so mehr unterschiedliche Betriebsdrosseln zur Verfügung, je feiner die Abstufung gewählt ist. Als vorteilhaft wird es derzeit angesehen, durch eine entsprechende Anzahl von Betriebsdrosseln etwa 30 bis 50 unterschiedliche, unveränderlich vorgegebene Durchflussstufen bereitzustellen.

Eine zur Ausgabe des der eingestellten Betriebsgeschwindigkeit entsprechenden Soll-Referenzwertes dienende Meldeeinrichtung ist insbesondere als unmittelbarer Bestandteil des Einstellgerätes ausgeführt. Es wäre ohne weiteres denkbar, durch datentechnische Verknüpfung mittels drahtlos übermittelter Signale eine in weiten Teilen automatisierte Identifikation der als Ersatz für das Einstellgerät geeigneten Betriebsdrossel hervorzurufen.

Bei einer besonders vorteilhaften Ausgestaltung der Meldeeinrichtung ist diese als Anzeigeeinrichtung ausgeführt, die ein unmittelbares visuelles Erkennen des eingestellten Soll-Referenzwertes ermöglicht, so dass anschließend durch einfachen visuellen Vergleich mit den entsprechend markierten Betriebsdrosseln die notwendig Auswahl getroffen werden kann. Beispielsweise können die Betriebsdrosseln mit ihren Ist-Referenzwerten durchnumeriert sein, während die Anzeigeeinrichtung den erforderlichen Soll-Referenzwert numerisch anzeigt. Alternativ wären auch alphanumerische Bezugnahmen möglich. Auch auf Farbkodierungen könnte beispielsweise zurückgegriffen werden. Denkbar wäre es auch, die Anzeigeeinrichtung mit einer Skala auszustatten, von der der erhaltene Soll-Referenzwert ablesbar ist.

Die Betriebsdrosseln können sehr einfach aufgebaut sein, da sie keinerlei Verstellmimiken für die Beeinflussung des Drosselungswertes benötigen.

Am einfachsten erscheint eine Bauform, bei der die Betriebsdrosseln zur festen Vorgabe des jeweiligen Drosselungswertes über einen Drosselkanal mit entsprechend dimensioniertem Kanalquerschnitt verfügen.

Man könnte auch eine oder mehrere Betriebsdrosseln bereitstellen, die standardmäßig mit einem einen minimalen Querschnitt aufweisenden Drosselkanal ausgestattet sind, der mittels eines oder mehrerer bereitgestellter Werkzeuge, die gemäß den Ist-Referenzwerten identifiziert oder einstellbar sind, von Fall zu Fall im Querschnitt entsprechend vergrößert werden.

Um die Kosten zur Bereitstellung bzw. Magazinzierung einer großen Anzahl von Betriebsdrosseln zu minimieren, können die Betriebsdrosseln baukastenartig bereitgestellt werden. Dies geschieht insbesondere dadurch, dass eine Mehrzahl von entsprechend den unterschiedlichen Drosselungswerten ausgebildeten Drosselungseinheiten vorgesehen ist und dass ferner eine geringere Anzahl standardisiert ausgebildeter, das Einschalten in die Fluidverbindung gestattender Anschlusseinheiten vorgesehen ist, so dass sich eine Betriebsdrossel jeweils aus einer der standardisierte Anschlusseinheiten und einer der Drosselungseinheiten zusammensetzen lässt.

Sowohl die Einstelldrossel als auch die Betriebsdrosseln können bei Bedarf über ein Rückschlagventil verfügen, das den für die Vorgabe des Drosselungswertes verantwortlichen Drosselmitteln parallel geschaltet ist. Auf diese Weise wird erreicht, dass das Druckmedium nur in der einen Strömungsrichtung gedrosselt wird, während in der entgegengesetzten Strömungsrichtung eine ungedrosselte Strömung mit höherer Durchflussrate möglich ist.

Das Einstellgerät und die Betriebsdrosseln sowie das oder die ggf. vorhandenen Werkzeuge werden zweckmäßigerweise in einem tragbaren Behälter zur Verfügung gestellt, der sich leicht zwischen den verschiedenen Einsatzorten transportieren lässt.

Nachfolgend wird die Erfindung anhand der beiliegenden Zeichnung näher erläutert. In dieser zeigen:
- Figur 1: in schematischer Darstellung eine bevorzugte Bauform einer zur Vorgabe der Betriebsgeschwindigkeit eines fluidbetätigten Antriebes geeigneten Einrichtung,
- Figur 2: eine Verwendung des Einstellgerätes an einem fluidbetätigten Antrieb,
- Figur 3: eine entsprechend der Verwendung des Einstellgerätes ausgewählt Betriebsdrossel im Längsschnitt, und
- Figur 4: den fluidbetätigten Antrieb aus Figur 2, wobei das in Figur 2 eingesetzte Einstellgerät durch die in Figur 3 gezeigte Betriebsdrossel ersetzt ist.

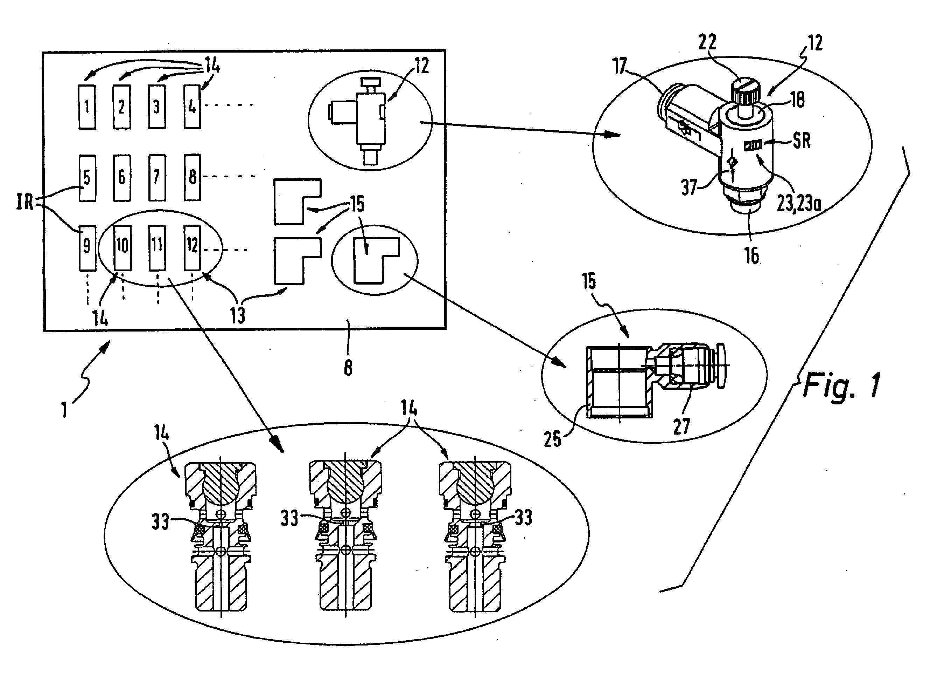

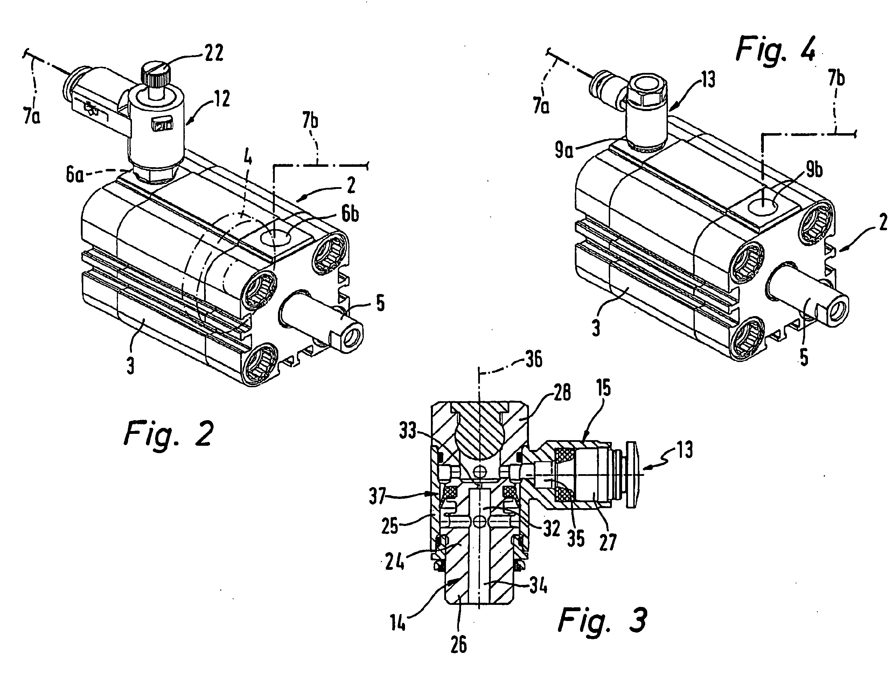

Die Figur 1 zeigt eine insgesamt mit Bezugsziffer 1 bezeichnete Geschwindigkeitsvorgabeeinrichtung, mit deren Hilfe die Möglichkeit besteht, die Betriebsgeschwindigkeit eines in Figuren 2 und 4 exemplarisch illustrierten fluidbetätigten Antriebes 2 variabel vorzugeben.

Der abgebildete fluidbetätigte Antrieb 2 ist ein mit Druckluft betätigbarer Linearantrieb. Möglich wäre allerdings auch eine Ausgestaltung als Drehantrieb und/oder ein Betrieb mit einem hydraulischen Fluid als Antriebsmedium.

Der Antrieb 2 besitzt ein Gehäuse 3, in dem ein strichpunktiert angedeuteter Kolben 4 untergebracht ist, der durch Fluidkraft linear verschiebbar ist. Mit dem Kolben 4 ist ein exemplarisch als Kolbenstange ausgeführtes Abtriebsteil 5 bewegungsgekoppelt, das die Bewegung des Kolbens 4 mitmacht. Der Kolben 4 unterteilt das Innere des Gehäuses 3 in zwei Arbeitsräume, die jeweils mit einem das Gehäuse 3 durchsetzenden Fluidkanal 6a, 6b in Verbindung stehen. Mittels einer an den jeweiligen Fluidkanal 6a, 6b angeschlossenen, in der Zeichnung lediglich strichpunktiert angedeuteten Fluidverbindung 7a, 7b kann fluidisches Druckmedium in den jeweiligen Arbeitsraum eingespeist bzw. aus dem jeweiligen Arbeitsraum abgeführt werden. Auf diese Weise kann der Kolben 4 zu einer Linearbewegung angetrieben werden, die sich an dem Abtriebsteil 5 abgreifen lässt, um beispielsweise ein Bauteil einer Maschine zu betätigen. Die Verfahrgeschwindigkeit des Abtriebsteils 5, die der Betriebsgeschwindigkeit des fluidbetätigten Antriebes 2 entspricht, hängt dabei maßgeblich von der Strömungsrate des zu- bzw. abströmenden Fluides ab. Mit anderen Worten besteht die Möglichkeit, durch Vorgabe unterschiedlicher Strömungsraten die Betriebsgeschwindigkeit des fluidbetätigten Antriebes 2, das heißt beim Ausführungsbeispiel die Verfahrgeschwindigkeit des Abtriebsteils 5, zu variieren.

Mit der Geschwindigkeitsvorgabeeinrichtung 1 lässt sich die Betriebsgeschwindigkeit des Antriebes 2 nach Bedarf einstellen. Gleichzeitig kann durch sie gewährleistet werden, dass die getroffene Einstellung nicht mehr ohne weiteres durch unbefugtes Personal oder auch nur versehentlich verändert wird. Solche Veränderungen würden sich nachteilig auf die Koordination des fluidbetätigten Antriebes 2 mit anderen Antrieben auswirken und würden so letztlich die Funktion einer mit mehreren Antrieben ausgestatteten Maschine beeinträchtigen können.

Die Geschwindigkeitsvorgabeeinrichtung 1 setzt sich aus mehreren Komponenten zusammen. Einige dieser Komponenten sind in Figur 1 in ovalen Umrahmungen nochmals vergrößert einzeln dargestellt.

Die Geschwindigkeitsvorgabeeinrichtung 1 enthält zunächst einen tragbaren Behälter 8, in dem die funktionellen Komponenten der Geschwindigkeitsvorgabeeinrichtung 1 untergebracht sind. Der Behälter 8 kann samt Inhalt zum jeweiligen Einsatzort getragen werden, was die Handhabung der erfindungsgemäßen Einrichtung sehr vereinfacht.

Als wesentliche funktionelle Komponenten verfügt die Geschwindigkeitsvorgabeeinrichtung 1 über mindestens ein Einstellgerät 12 und eine Mehrzahl von Betriebsdrosseln 13, wobei letztere beim Ausführungsbeispiel nach Art eines Baukastens bereitgestellt sind und sich von Fall zu Fall aus verschiedenen in dem Behälter 8 zur Verfügung gestellten Komponenten zusammensetzen lassen. Eine einsatzbereite Betriebsdrossel 13 geht jeweils aus Figuren 3 und 4 hervor.

Die zu dem Baukasten gehörenden Komponenten der Betriebsdrosseln 13 sind zum einen eine Mehrzahl von Drosselungseinheiten 14 und zum anderen mehrere Anschlusseinheiten 15. Aus je einer Drosselungseinheit 14 und einer Anschlusseinheit 15 lässt sich eine Betriebsdrossel 13 insbesondere werkzeuglos zusammenbauen.

Das Einstellgerät 12 verfügt über einen ersten Geräteanschluss 16 und einen zweiten Geräteanschluss 17. Der erste Geräteanschluss 16 ist an die am Gehäuse 3 des Antriebes 2 vorgesehenen Anschlussöffnungen 9a, 9b der Fluidkanäle 6a, 6b derart angepasst, dass er dort unter Abdichtung befestigt werden kann. Der zweite Geräteanschluss 17 ist ausgebildet, um eine zu der Fluidverbindung 7a gehörende Fluidleitung, beispielsweise einen Druckluftschlauch, lösbar anschließen zu können. Auf diese Weise ist es möglich, das Einstellgerät 12 so an dem Gehäuse 3 des fluidbetätigten Antriebes 2 anzubringen, dass es in die Fluidverbindung 7a eingeschaltet ist.

Im Innern des Einstellgerätes 12 verläuft ein nicht näher dargestellter Durchgangskanal, der von einer als Einstelldrossel 18 bezeichneten Drossel mit variabel einstellbaren Drosselungswerten beherrscht wird. Durch Verändern der Drosselungswerte kann Einfluss auf die Strömungsrate genommen werden, mit der das Druckmedium den Durchgangskanal des Einstellgerätes 12 durchströmt. An einem von außen her zugänglichen Betätigungselement 22, beispielsweise ein Drehknopf, lässt sich manuell der gewünschte Drosselungswert justieren.

Zweckmäßigerweise unmittelbar an dem Einstellgerät 12 ist eine Meldeeinrichtung 23 vorgesehen, die einen dem momentan eingestellten Drosselungswert entsprechenden Soll-Referenzwert"SR" ausgibt. Vorzugsweise ist die Meldeeinrichtung 23 als Anzeigeeinrichtung 23a ausgeführt, die ein unmittelbares visuelles Erkennen bzw. Ablesen des eingestellten Soll-Referenzwertes ermöglicht.

Beim Ausführungsbeispiel ist die Anzeigeeinrichtung 23a so ausgeführt, dass sie die Soll-Referenzwerte numerisch anzeigt. Durch die Einstelldrossel 18 kann also eine Vielzahl von Drosselungswerten eingestellt werden, denen dann jeweils ein ablesbarer Soll-Referenzwert "SR" entspricht. Bei der abgebildeten Einstellung wird als Referenzwert die Zahl "20" angezeigt.

Im Gegensatz zur Einstelldrossel 18 des Einstellgerätes 12 sind die Betriebsdrosseln 13 samt und sonders als Festdrosseln bzw. Fixdrosseln ausgebildet, die jeweils über unveränderlich fest vorgegebene Drosselungswerte verfügen. Der jeweilige Drosselungswert wird bei der bevorzugten baukastenartigen Lösung durch die einzelnen Drosselungseinheiten 14 vorgegeben, während die Anschlusseinheiten 15 die Drosselungsintensität nicht beeinflussen und daher über einen standardisierten, untereinander identischen Aufbau verfügen können.

Jeder Betriebsdrossel 13 ist ein dem fest vorgegebenen Drosselungswert entsprechender Ist-Referenzwert "IR" zugeordnet. Diese Ist-Referenzwert-Zuordnung geschieht beim Ausführungsbeispiel in Bezug auf die sich voneinander unterscheidenden Drosselungseinheiten 14. Der Ist-Referenzwert "IR" ist zweckmäßigerweise unmittelbar an den Betriebsdrosseln 13 vermerkt und findet sich beim Ausführungsbeispiel als Aufdruck oder Einprägung an den einzelnen Drosselungseinheiten 14. Alternativ oder zusätzlich könnte auch der Behälter 8 im Bereich der in ihm vorgesehenen Aufnahmen für die Drosselungseinheiten mit den Ist-Referenzwerten gekennzeichnet sein.

In Bezug auf die Referenzwerte ist festzuhalten, dass die Drosselungswerte der Einstelldrossel 18 und der verschiedenen Betriebsdrosseln 13 für die einander entsprechenden Soll- und Ist-Referenzwerte übereinstimmen. Der mit einer Betriebsdrossel 13 des Ist-Referenzwertes "20" erzielbare Drosselungswert ist also der gleiche, der sich ergibt, wenn die Einstelldrossel 18 des Einstellgerätes 12 auf den Soll-Referenzwert "20" eingestellt ist. Dem entsprechend ergeben sich also übereinstimmende Strömungsraten für das Druckmedium, unabhängig davon, ob es das Einstellgerät 12 oder eine Betriebsdrossel 13 durchströmt, sofern der eingestellte Soll-Referenzwert "SR" dem Ist-Referenzwert "IR" entspricht.

Aus Figur 3 geht ein bevorzugter Aufbau einer aus einer Drosselungseinheit 14 und einer Anschlußeinheit 15 zusammengebauten Betriebsdrossel 13 hervor. Sie beinhaltet eine Drosselungseinheit 14, die einen nach Art einer Hohlschraube ausgeführten Grundkörper 24 aufweist, auf den die Anschlusseinheit 15 mit einem hülsenartigen Lagerteil 25 aufgesteckt ist. Der Fußabschnitt des Grundkörpers 24 ragt über das Lagerteil 25 hinaus und bildet einen ersten Drosselanschluss 26, der so ausgebildet ist, dass er unter Abdichtung an einer Anschlussöffnung 9 des Gehäuses 3 des Antriebes 2 fixierbar ist. Es ist insbesondere vorgesehen, dass der erste Drosselanschluss 26 über ein Außengewinde verfügt, das gemäß Figur 4 ein Einschrauben in die Anschlussöffnung 9 zulässt. Um das Einschrauben mit einem Werkzeug zu unterstützen, ist der Kopfabschnitt 28 des Grundkörpers 24 mit einer beispielsweise als Sechskant konturierten Werkzeugangriffspartie ausgestattet.

Von dem hülsenartigen Lagerteil 25 ragt ein zweiter Drosselanschluss 27 weg. Er ist ausgebildet, um eine Fluidleitung, beispielsweise einen Druckmittelschlauch, unter Abdichtung lösbar zu fixieren. Während die Ausgestaltung des ersten Drosselanschlusses 26 derjenigen des ersten Geräteanschlusses 16 des Einstellgerätes 12 entspricht, ist der zweite Drosselanschluss 27 in vergleichbarer Weise wie der zweite Geräteanschluss 17 des Einstellgerätes 12 ausgebildet.

Durch die Betriebsdrossel 13 erstreckt sich ein Drosselkanal 32. Dieser verbindet den ersten Drosselanschluss 26 mit dem zweiten Drosselanschluss 27 und beinhaltet eine Drosselstelle 33, an der sich der engste Kanalquerschnitt des Drosselkanals 32 befindet.

Beim Ausführungsbeispiel besitzt der Drosselkanal 32 einen in der Drosselungseinheit 14 verlaufenden ersten Drosselkanalabschnitt 34 und einen damit verbundenen, in der Anschlusseinheit 15 verlaufenden zweiten Drosselkanalabschnitt 35. Diese beiden Drosselkanalabschnitte 34, 35 kommunizieren miteinander im Übergangsbereich zwischen dem Lagerteil 25 und dem Grundkörper 24. Die fluidische Verbindung ist dabei unabhängig von der Drehwinkelstellung der Anschlusseinheit 15 gegeben, die mit Bezug zur Längsachse 36 der Drosselungseinheit 14 relativ zu dieser verdrehbar ist.

Den von der Drosselstelle 33 gebildeten Drosselmitteln der Betriebsdrossel 13 parallel geschaltet ist ein zweckmäßigerweise eine biegsame Lippe als Ventilglied aufweisendes Rückschlagventil 37. Auf diese Weise kann das Druckmedium die Betriebsdrossel 13 in der einen Richtung ungedrosselt und ungehindert durchströmen, während es in der Gegenrichtung gezwungen ist, die Drosselstelle 33 zu passieren. Die Sperrrichtung des Rückschlagventil 37 hängt von der Einbaurichtung des Ventilgliedes ab.

Abgesehen von der Integration einer justierbaren Einstelldrossel 18 an Stelle einer einen unveränderlichen Querschnitt aufweisenden Drosselstelle 33, und ferner abgesehen von der zusätzlich vorhandenen Meldeeinrichtung 23, kann der Aufbau des Einstellgeräts 12 demjenigen der Betriebsdrosseln 13 entsprechen. Insbesondere besteht die Möglichkeit, auch das Einstellgerät 12 mit einem Rückschlagventil 37 auszustatten, das dann der Einstelldrossel 18 wirkungsmäßig parallel geschaltet ist.

Beim Ausführungsbeispiel sind die Drosselungseinheiten 14 zur Vorgabe der gewünschten unterschiedlichen festen Drosselungswerte mit entsprechend unterschiedlich dimensionierten Drosselkanalquerschnitten versehen. Aus Figur 1 ist hierbei gut ersichtlich, wie sich die unterschiedlichen Drosselkanalquerschnitte durch lokale Drosselstellen 33 mit unterschiedlichen Strömungsquerschnitten realisieren lassen.

Die beschriebene Geschwindigkeitsvorgabeeinrichtung 1 lässt sich besonders vorteilhaft in der nachstehend beschriebenen Art und Weise einsetzen. Dabei sei unterstellt, dass die Aufgabe darin besteht, die Einfahrgeschwindigkeit des Abtriebsteils 5 einzustellen bzw. die Zeit, die verstreicht, bis das Abtriebsteil 5 aus der in der Zeichnung abgebildeten ausgefahrenen Stellung in die eingefahrene Stellung zurückbewegt ist.

Zunächst wird in die Fluidverbindung 7a ein Einstellgerät 12 eingeschaltet, das bei einer Strömungsrichtung vom ersten Geräteanschluss 16 zum zweiten Geräteanschluss 17 drosselt, in der Gegenrichtung jedoch aufgrund des integrierten und in Figur 1 strichpunktiert angedeuteten Rückschlagsventils 37 einen freien Durchgang ermöglicht. Das Einstellgerät 12 wird dabei mit seinem ersten Geräteanschluss 16 an der dafür vorgesehenen Anschlussöffnung 9a des Gehäuses 3 des Antriebes 2 fixiert. Die andere Anschlussöffnung 9b ist an eine weitere Fluidverbindung 7b angeschlossen, in die kein Einstellgerät 12 eingeschaltet ist. Die beiden Fluidverbindung 7a, 7b stehen mit einer nicht näher dargestellten Steuerventileinrichtung in Verbindung, die ein abwechselndes Zuführen und Abführen von Druckmedium ermöglicht.

Während einer Einstellphase wird nun das Abtriebsteil 5 durch die vorgenannte Fluidbeaufschlagung abwechselnd im Einfahrsinne und im Ausfahrsinne bewegt. Durch gleichzeitiges Justieren der Einstelldrossel 18 wird dabei die Einfahrgeschwindigkeit des Abtriebsteils 5 auf das gewünschte Maß eingestellt. Ist die gewünschte Verfahrgeschwindigkeit gefunden, wird an der Anzeigeeinrichtung 23a der angezeigte Soll-Referenzwert "SR" abgelesen.

Als nächstes wird das Einstellgerät 12 entfernt und es wird an seiner Stelle gemäß Figur 4 eine Betriebsdrossel 13 installiert, deren Ist-Referenzwert "IR" dem vom Einstellgerät 12 abgelesenen Soll-Referenzwert "SR" entspricht.

Auf diese Weise ist der fluidbetätigte Antrieb 2 letztlich mit einer als Festdrossel konzipierten Betriebsdrossel 13 ausgestattet, deren Drosselungswert dem für den Betrieb des fluidbetätigten Antriebes 2 gewünschten Wert entspricht. Obgleich dieser Wert unter Einsatz des Einstellgerätes 12 sehr exakt und variabel eingestellt wurde, kann er nun nicht mehr ohne weiteres verändert werden. Dies führt zu einer sehr hohen Betriebssicherheit des Antriebes.

Es wäre ohne weiteres möglich, gleichzeitig an beiden Anschlussöffnungen 9a, 9b des Antriebes 2 je ein Einstellgerät 12 zu installieren, um eine gleichzeitige Einstellung von sowohl der Einfahrgeschwindigkeit als auch der Ausfahrgeschwindigkeit des Antriebes vorzunehmen.

Vor der Installation am Antrieb 2 wurde die ausgewählte Betriebsdrossel 13 aus einer Anschlusseinheit 15 und einer mit dem entsprechenden Ist-Referenzwert "IR" identifizierten Drosselungseinheit 14 zusammengesetzt. Der baukastenartige Aufbau hat den Vorteil, dass man von den Anschlusseinheiten 15 lediglich eine der maximal zu realisierenden Anzahl von Betriebsdrosseln 13 entsprechende Anzahl zur Verfügung stellen muss, woraus sich eine nicht unerhebliche Kosteneinsparung ergibt.

Es sei allerdings darauf hingewiesen, dass die Geschwindigkeitsvorgabeeinrichtung 1 ohne weiteres auch mit betriebsfertig zusammengebauten Betriebsdrosseln ausgestattet sein könnte.

Auch um möglicherweise unterschiedlichen Anschlussgeometrien der Antriebe oder sonstigen abweichenden Gegebenheiten Rechnung tragen zu können, kann die Geschwindigkeitsvorgabeeinrichtung 1 anstatt mit nur einem auch mit gleichzeitig mehreren Einstellgeräten 12 ausgestattet sein, die dann alternativ einsetzbar sind.

Anstelle einer numerischen Referenzwerteangabe wäre sowohl am Einstellgerät 12 als auch an den Betriebsdrosseln 13 beispielsweise auch eine alphanumerische Identifizierung möglich oder eine wie auch immer geartete andere Codierung, beispielsweise unter Verwendung unterschiedlicher Farbmuster. Zum Ablesen der Soll-Referenzwerte könnte das Einstellgerät 12 auch mit einer Kombination aus Skala und Zeiger versehen sein.

Die numerische Anzeige am Einstellgerät 12 kann beispielsweise mittels eines Zählwerkes realisiert werden.

Je nach Anwendungsfall können verschieden zusammengestellte Geschwindigkeitsvorgabeeinrichtungen 1 zur Verfügung gestellt werden, bei denen die Drosselungswerte der Betriebsdrosseln 13 unterschiedlich stark abgestuft sind. Für Anwendungen mit geringen Durchflusswerten und dementsprechend feinfühligerer Justiernotwendigkeit, können dann beispielsweise wesentlich geringere Abstände zwischen den betragsmäßig aufeinanderfolgenden Drosselungswerten zur Verfügung gestellt werden, als bei Anwendungen für große Durchflusswerte.

Die Geschwindigkeitsvorgabeeinrichtung 1 kann beispielsweise als Startset mit einer gewissen Grundausstattung realisiert werden, wobei der Anwender die Möglichkeit hat, bei Bedarf weitere Betriebsdrosseln 13 und/oder Einstellgeräte 12 nachzuordern, wenn die vorhandene Anzahl nicht mehr ausreichen sollte oder wenn andere Drosselungsintensitäten abgedeckt werden sollen.

## Patentansprüche

1. Verfahren zur Vorgabe einer Betriebsgeschwindigkeit eines fluidbetätigten Antriebes (2), wobei man ein eine Einstelldrossel (18) mit variabel einstellbaren Drosselungswerten aufweisendes Einstellgerät (12) in eine zum betreffenden Antrieb (2) führende Fluidverbindung (7a) einschaltet und durch Verstellen der Einstelldrossel (18) die gewünschte Betriebsgeschwindigkeit einstellt, wonach man anhand eines durch das Einstellgerät (12) entsprechend dem eingestellten Drosselungswert zur Verfügung gestellten Soll-Referenzwertes aus einer Mehrzahl bereitgestellter Betriebsdrosseln, die über sich in Abstufungen voneinander unterscheidende, fest vorgegebene Drosselungswerte verfügen und mit entsprechenden Ist-Referenzwerten identifiziert sind, diejenige Betriebdrossel auswählt, deren fest vorgegebener Drosselungswert dem an dem Einstellgerät eingestellten Drosselungswert entspricht, wonach man das Einstellgerät durch ausgewählte Betriebsdrosseln ersetzt.

2. Einrichtung zur Vorgabe einer Betriebsgeschwindigkeit eines fluidbetätigten Antriebes, mit mindestens einem lösbar in die zum betreffenden Antrieb (2) führende Fluidverbindung (7a) einschaltbaren Einstellgerät (12), das eine Einstelldrossel (18) mit variabel einstellbaren Drosselungswerten aufweist und das mit einer Meldeeinrichtung (23) ausgestattet ist, die einen dem momentan eingestellten Drosselungswert entsprechenden Soll-Referenzwert ausgibt, und mit einer Mehrzahl von jeweils anstelle des Einstellgerätes (12) in die Fluidverbindung (7a) einschaltbaren Betriebsdrosseln (13), die über sich in Abstufungen voneinander unterscheidende, fest vorgegebene Drosselungswerte verfügen und denen jeweils ein dem fest vorgegebenen Drosselungswert entsprechender Ist-Referenzwert zugeordnet ist, wobei die Drosselungswerte der Einstelldrossel (18) und der Betriebsdrosseln (13) bei einander entsprechenden Soll- und Ist-Referenzwerten übereinstimmen, so dass nach dem Ersetzen des Einstellgerätes (12) durch eine im Referenzwert übereinstimmende Betriebsdrossel (13) die durch das Einstellgerät (12) eingestellte Betriebsgeschwindigkeit beibehalten bleibt.

3. Einrichtung nach Anspruch 2, **dadurch gekennzeichnet, dass** die Meldeeinrichtung (23) eine ein unmittelbares visuelles Erkennen des eingestellten Soll-Referenzwertes ermöglichende Anzeigeeinrichtung (23a) ist.

4. Einrichtung nach Anspruch 3, **dadurch gekennzeichnet, dass** die Anzeigeeinrichtung (23a) die Soll-Referenzwerte numerisch oder alphanumerisch anzeigt.

5. Einrichtung nach einem der Ansprüche 2 bis 4, **dadurch gekennzeichnet, dass** die Meldeeinrichtung (23) unmittelbar an dem Einstellgerät (12) vorgesehen ist.

6. Einrichtung nach einem der Ansprüche 2 bis 5, **dadurch gekennzeichnet, dass** die Ist-Referenzwerte unmittelbar an den Betriebsdrosseln (13) vermerkt sind.

7. Einrichtung nach einem der Ansprüche 2 bis 6, **dadurch gekennzeichnet, dass** die Betriebsdrosseln (13) zur festen Vorgabe des jeweiligen Drosselungswertes einen Drosselkanal (32) mit entsprechend dimensioniertem Kanalquerschnitt aufweisen.

8. Einrichtung nach einem der Ansprüche 2 bis 7, **dadurch gekennzeichnet, dass** die Betriebsdrosseln (13) baukastenartig bereitgestellt sind, indem eine Mehrzahl von entsprechend den unterschiedlichen Drosselungswerten ausgebildeten Drosselungseinheiten (14) vorgesehen ist, die sich mit standardisierten Anschlusseinheiten (15) zu jeweils einer Betriebsdrossel (13) kombinieren lassen.

9. Einrichtung nach einem der Ansprüche 2 bis 8, **dadurch gekennzeichnet, dass** die Einstelldrossel (18) und/oder die Betriebsdrosseln (13) ein den Drosselmitteln (33) parallel geschaltetes Rückschlagventil (37) beinhalten.

10. Einrichtung nach einem der Ansprüche 2 bis 9, **gekennzeichnet durch** einen tragbaren Behälter (8), in dem das Einstellgerät (12) und die Betriebsdrosseln (13) entnehmbar bereitgestellt werden.

11. Einrichtung nach einem der Ansprüche 2 bis 10 zur Verwendung bei der Durchführung des Verfahrens gemäß Anspruch 1.

## Claims

1. Method for presetting the operating speed of a fluid-actuated drive (2), wherein a variable restrictor (18) with an adjusting device (12) which has variably adjustable restriction values is inserted in a fluidic connection (7a) leading to the drive (2) concerned and sets the desired operating speed by adjusting the variable restrictor (18), after which, with the aid of a required reference value provided by the adjusting device (12) in accordance with the set restriction value, there is selected, from a multiplicity of available operating restrictors which have permanently preset restriction values differing from one another in steps and which are identified by corresponding actual reference values, that operating restrictor with a permanently preset restriction value corresponding to the restriction value set by the adjusting device, whereupon the adjusting device is replaced by selected operating restrictors.

2. Device for presetting an operating speed of a fluid-actuated drive, with at least one adjusting device (12) which may be inserted releasably in the fluidic connection (7a) leading to the drive (2) concerned and has a variable restrictor (18) with variably adjustable restriction values and is equipped with an indicator unit (23) which shows a required reference value corresponding to the currently set restriction value, and with a multiplicity of operating restrictors (13) which may be inserted in the fluidic connection (7a) in place of the adjusting device (12), said operating restrictors having permanently preset restriction values differing from one another in steps and each being assigned an actual reference value corresponding to the permanently preset restriction value, wherein the restriction values of the variable restrictor (18) and the operating restrictors (13) coincide in the event of matching required and actual reference values, so that after the adjusting device (12) is replaced by an operating restrictor (13) with a matching reference value, the operating speed set by the adjusting device (12) is maintained.

3. Device according to claim 2, **characterised in that** the indicator unit (23) is a display unit (23a) permitting direct visual recognition of the set required reference value.

4. Device according to claim 3, **characterised in that** the display unit (23a) shows the required reference values in numerical or alpha-numeric form.

5. Device according to any of claims 2 to 4, **characterised in that** the indicator unit (23) is provided directly on the adjusting device (12).

6. Device according to any of claims 2 to 5, **characterised in that** the actual reference values are recorded directly on the operating restrictors (13).

7. Device according to any of claims 2 to 6 **characterised in that**, for permanent presetting of the respective restriction value, the operating restrictors (13) have a restriction passage (32) with a suitably dimensioned passage cross-section.

8. Device according to any of claims 2 to 7, **characterised in that** the operating restrictors (13) are modular in form, with a multiplicity of restrictor units (14) designed for the various restriction values being provided, and having standardised connection units (15) allowing their combination to form an operating restrictor (13).

9. Device according to any of claims 2 to 8, **characterised in that** the variable restrictor (18) and/or the operating restrictors (13) contain a non-return valve (37) connected in parallel to the restriction means (33).

10. Device according to any of claims 2 to 9, **characterised by** a portable container (8), in which the adjusting device (12) and the operating restrictors (13) are provided so as to be removable.

11. Device according to any of claims 2 to 10 for use in the implementation of the method according to claim 1.

## Revendications

1. Procédé destiné à régler une vitesse de fonctionnement d'un actionneur (2) activé par un fluide, un organe de réglage (12), muni d'un restricteur de réglage (18) avec des valeurs de restriction réglables de manière variable, étant monté dans un conduit de fluide (7a) menant vers l'actionneur (2) concerné et la vitesse de fonctionnement souhaitée étant définie par le réglage du restricteur de réglage (18), à la suite de quoi, à l'appui d'une valeur de référence théorique, fournie par l'organe de réglage (12) conformément à la valeur de restriction réglée, on choisit, parmi une pluralité de restricteurs opérationnels mis à disposition, qui possèdent des valeurs de restriction fermement prédéfinies et se différenciant les unes des autres par des graduations, et qui sont identifiés par des valeurs de référence réelles correspondantes, le restricteur opérationnels dont la valeur de restriction fermement prédéfinie correspond à la valeur de restriction réglée sur l'organe de réglage, à la suite de quoi on remplace l'organe de réglage par des restricteurs opérationnels sélectionnés.

2. Dispositif destiné à régler une vitesse de fonctionnement d'un actionneur activé par un fluide, comportant au moins un organe de réglage (12), qui peut être monté de manière amovible dans le conduit de fluide (7a) menant vers l'actionneur (2) concerné, et qui comporte un restricteur de réglage (18) avec des valeurs de restriction réglables de manière variable et qui est muni d'un dispositif de signalisation (23), qui délivre une valeur de référence théorique correspondant à la valeur de restriction actuellement réglée, et comportant une pluralité de restricteurs opérationnels (13), qui peuvent être montés chacun dans le conduit de fluide (7a) en lieu et place de l'organe de réglage (12) et qui possèdent des valeurs de restriction fermement prédéfinies et se différenciant les unes des autres par des graduations, et à chacun desquels est associée une valeur de référence réelle correspondant à la valeur de restriction fermement prédéfinie, les valeurs de restriction du restricteur de réglage (18) et des restricteurs opérationnels (13) concordant entre eiies lorsque les valeurs de référence théoriques et réelles correspondent entre elles, de telle sorte que, après le remplacement de l'organe de réglage (12) par un restricteur opérationnel (13) concordant avec la valeur de référence, la vitesse de fonctionnement réglée par l'organe de réglage (12) reste maintenue.

3. Dispositif selon la revendication 2, **caractérisé en ce que** le dispositif de signalisation (23) est un dispositif d'affichage (23a) permettant une détection visuelle directe de la valeur de référence théorique réglée.

4. Dispositif selon la revendication 3, **caractérisé en ce que** le dispositif d'affichage (23a) affiche les valeurs de référence théoriques dans l'ordre numérique ou alphanumérique.

5. Dispositif selon l'une quelconque des revendications 2 à 4, **caractérisé en ce que** le dispositif de signalisation (23) est prévu directement sur l'organe de réglage (12).

6. Dispositif selon l'une quelconque des revendications 2 à 5, **caractérisé en ce que** les valeurs de référence réelles sont repérées directement sur les restricteurs opérationnels (13).

7. Dispositif selon l'une quelconque des revendications 2 à 6, **caractérisé en ce que** les restricteurs opérationnels (13), en vue de définir fermement la valeur de restriction de chacun d'eux, comportent un canal d'étranglement (32), dont la section de passage est dimensionnée de manière correspondante.

8. Dispositif selon l'une quelconque des revendications 2 à 7, **caractérisé en ce que** les restricteurs opérationnels (13) sont disponibles sous forme modulaire, du fait qu'il est prévu une pluralité d'unités de restriction (14), qui sont conçues conformément aux différentes valeurs de restriction, qui peuvent être combinées avec des unités de raccordement (15) standardisées pour former respectivement un restricteur opérationnel (13).

9. Dispositif selon l'une quelconque des revendications 2 à 8, **caractérisé en ce que** le restricteur de réglage (18) et/ou les restricteurs opérationnels (13) comportent un clapet de anti-retour (37) monté en parallèle avec les moyens de restriction (33).

10. Dispositif selon l'une quelconque des revendications 2 à 9, **caractérisé par** un caisson (8) portable, dans lequel l'organe de réglage (12) et les restricteurs opérationnels (13) sont prêts à être retirés.

11. Dispositif selon l'une quelconque des revendications 2 à 10, pour la mise en oeuvre du procédé selon la revendication 1.
